# EUROPEAN PATENT APPLICATION

(11) **EP 3 767 404 A1**
(43) Date of publication of application: **20.01.2021**
(21) Application number: 19186889.2
(22) Date of filing: 18.07.2019
(51) Int. Cl.: G05B 19/042, G05B 23/02

(54) **IMPLEMENTING EVENT RULES FOR MAINTENANCE RELEVANT EVENTS IN A MULTITUDE OF MACHINES**

(71) Applicant: Siemens Aktiengesellschaft, 80333 München (DE)
(72) Inventor: Stefan, Ioana, 500483 Brasov (RO); Milicic Brandt, Maja, 81827 München (DE); Becher, Silvio, 81827 München (DE)
(74) Representative: Maier, Daniel Oliver

(57) **Abstract**

Method for implementing event rules for maintenance relevant events in a multitude of machines, whereas the method uses a computer system containing a common central configurator (CCC), whereas in order to transfer data the machines are connected to the common central configurator, the method comprising the steps of
- defining a maintenance relevant event for a certain class of machines by using the common central configurator (CCC),
- sending the event rule to an edge device (E1,E2) of at least one machine of this class, preferably to the edge devices (E1,E2) of all machines of this class, whereas the edge device (E1,E2) is part of the computer system, and storing the event rule in the edge device (E1,E2),
- storing the event rule in the common central configurator (CCC). Thus it is possible to implement event rules in a multitude of similar machines without having to implement those event rules on every single machine independently.

## Description

### FIELD OF THE INVENTION

The present invention relates to a method for implementing event rules for maintenance relevant events in a multitude of machines, whereas the method uses a computer system. The present invention also relates to respective computer program code means.

Among the multitude of machines there are machines which all have the same components or which have only some same major components and other components are different. Machines with the same major components can be treated as one class of machines. Machines here especially include physical machines, like motors, pumps, machine tools like CNC machines (computerized numerical control machines), which machines normally have machine controllers implemented in hardware and/or software.

### STATE OF THE ART

Machines become more and more complex. A machine can comprise software and/or hardware components with different operation lifetimes. Accordingly, it is necessary to perform maintenance activities to maintain a machine operable. Maintenance activities comprise for instance a replacement of failed or worn-out components of the machine. Further, the machine can comprise resources which are consumed during operation of the machine. For instance, a machine can comprise a reservoir or container for lubrication fluids which are used to lubricate components of the machine. Accordingly, the maintenance of a machine is in itself a complex process which is performed with the goal to avoid a breakdown of the machine or to prohibit a decreasing performance of the machine.

WO 2019/016148 A1 discloses a method and system for automatic maintenance of a machine comprising the steps of receiving at least one maintenance relevant event from a controller of the machine, augmenting the received event with the event's machine context read from a machine maintenance ontology, matching the event's machine context with maintenance rules to generate at least one maintenance task comprising an associated task description, and providing a maintenance schedule for the machine assigning the generated maintenance task to suitable maintenance executing entities on the basis of the task description of the respective maintenance task.

The maintenance relevant event for example can be a machine disruption event indicating a disruption of at least one machine component of the machine, and/or a machine wearout event indicating a wearout of at least one machine component of the machine, and/or a time-triggered maintenance event. An event can be generated by the machine controller by evaluating sensor data from sensors monitoring a behaviour and/or operation state of machine components of the machine. The generated maintenance relevant event can comprise a time stamp and machine component indicators indicating affected machine components affected by the reported event.

If a multitude of machines of one class has to be maintained, the maintenance relevant events have to be implemented in the controller of each machine, which is very laborious. Additionally, one has to know how to address the required data points for a certain machine, which can be controller-specific and/or machine-specific, and how to generate new events on that controller, which normally is specific for the respective PLC (programmable logic controller).

### SUMMARY OF THE INVENTION

One object of the present invention therefore is to provide a method for implementing event rules for maintenance relevant events in a multitude of similar machines without having to implement those event rules on every single machine independently.

This object is achieved by a method according to claim 1. Claim 1 contains a method for implementing event rules for maintenance relevant events in a multitude of machines, whereas the method uses a computer system containing a common central configurator, whereas in order to transfer data the machines are connected to the common central configurator, the method comprising the steps of
- defining a maintenance relevant event for a certain class of machines by using the common central configurator,
- sending the event rule to an edge device of at least one machine of this class, preferably to the edge devices of all machines of this class, whereas the edge device is part of the computer system, and storing the event rule in the edge device,
- storing the event rule in the common central configurator.

So for a certain class of machines the respective maintenance relevant events, in the following just named "events", are defined only once and then the information on this event is sent to the edge device of a machine of this class of machines and stored in the edge device. The edge device is normally also connected to the machine controller of the respective machine The way how to communicate between common central configurator and the machine controllers and/or its edge devices, which controllers and/or edge devices can have different properties even for the machines of the same type, can be defined once and then used for future communication.

The term "machine" in the sense of claim 1 can refer to a physical machine (with one or more components) or to a component of a machine.

An edge device is a computer device which provides for a machine an entry to a computer network. Edge devices are local computers which collect all machine-relevant data, including e.g. CNC data for a CNC machine, and also PLC data and additional machine sensor data. The edge device can at least compute and store data. The edge device enhances the capabilities of the machine and/or the machine controller in that it establishes a data connection and makes computations with regard to event rules. The edge device can be a physical part of the machine, e.g. it can be situated in the same housing, or it can be physically separated from an existing machine, the latter e.g. being the case if an existing machine is later on equipped with an edge device.

The event for example can be, like in prior art, based on the usage of a machine and/or based on the condition of the machine. Condition based events are for example a machine disruption event indicating a disruption of at least one machine component of the machine, and/or a machine wearout event indicating a wearout of at least one machine component of the machine, or the excess of a given threshold. Usage based events are for example that a given operation time of the machine or a machine component has been reached, e.g. for a CNC machine 500,000 clamping cylces of the spindle. Or the event could also be a time-triggered maintenance event, irrespective of the usage and the condition of the machine, like a certain absolute time period. An event can be generated by the machine controller and/or by its edge device, by evaluating sensor data from sensors monitoring a behaviour and/or operation state of machine components of the machine. The generated maintenance relevant event can comprise a time stamp and machine component indicators indicating affected machine components affected by the reported event.

The data to be transferred from the common central configurator to the machines, i.e. to their edge devices, is for example the event rule. The data to be transferred from the the machines to the common central configurator are for example event messages which can be data sources for other events or event rules, respectively.

When defining a maintenance relevant event one could at the same time also define a corresponding maintenance rule for this event for this class of machines by using the common central configurator. These rules could also be stored in the common central configurator and applied by the common central configurator. However, normally these maintenance rules are stored in and applied by another entity of the computer system.

According to one embodiment of the invention the edge device is situated at or near the machine whereas the common central configurator is realized as a cloud service. Near means e.g. that the edge device has a distance to the machine of less than 100 m, normally less than 10 m. Near means e.g. in the same building. Cloud services can be, and normally are, executed in a physical place which is far away from the physical machines to be monitored. Far away means e.g. more than 100 m away, and/or e.g. at least in another building. Far away usually is understood as being away one or more kilometers. A cloud service is defined as the availability of computer system resources, like data storage and computing power, to many users over the Internet. This has the advantage that new machines, i.e. their edge devices, can be added to the computer system irrespective of their location. So a multitude of machines distributed over a large physical area can be managed by the method according to the invention.

According to one embodiment of the invention the edge device includes an complex event processing engine (CEP engine) which, on the basis of the event rule and on the basis of input data from the machine, creates an event message if the input data fulfills the event rule and sends the event message to a device which deploys a respective maintenance rule.

CEP engines are also called event correlation engines (event correlators). They analyze all events coming from their machine, select those which fulfill the event rule for a certain event, and send a respective event message to another entity, which then deploys the respective maintenance rule. CEP engines normally do not infer new events from the predefined events, but they can relate different events with each other.

The CEP engines are deployed near the machines. In this way the processing is done near the sensors and only the results relating to meaningful events (event messages) are sent to the central application responsible for maintenance. The CEP engine exposes interfaces to deploy and to delete CEP statements (=event messages). By deploying an event rule in the CEP engine the input data is processed and when the event pattern (=event rule) is met it generates a new event as output. The output of the CEP engine can be reused by other rules for further processing or it can be considered as final event. In this case the output is a final event and the maintenance tasks are generated for the machines. The way that the events are interpreted is chosen by the user who is defining the CEP rule.

The event message can be dealt with according to prior art, see e.g. WO 2019/016148 A1. After receiving an event message from an edge device of the machine, the received event message is matched with maintenance rules to generate at least one maintenance task comprising an associated task description, and providing a maintenance schedule for the machine assigning the generated maintenance task to suitable maintenance executing entities on the basis of the task description of the respective maintenance task.

According to one embodiment of the invention the edge device includes a message broker which receives signals from sensors of the machine and processes the signals before sending them as input data to the complex event processing engine. The message brokers are located near each machine and are used to transfer the signals of the machine, i.e. from its sensors, to the CEP engine. The message broker processes the message and sends only the meaningful events to the CEP engine and to the central application responsible for maintenance.

Each data source, like a sensor, publishes the signals on a different routing key. The routing key has a certain name or ID which is also stored in the common central configurator, e.g. in a knowledge base, see below. When a new event rule is deployed, the CEP engine subscribes to a unique routing key to the corresponding data source. The messages sent over the message broker e.g. have the following format: ID, timestamp, value. The ID is the name of the sensor, the timestamp gives the date when the signal was generated and the value is the value of the signal which is sent by the sensor.

According to one embodiment of the invention the common central configurator includes a knowledge base which stores a model of each machine, its data sources, its events and corresponding event rules, whereas new events are stored as new data sources.

The knowledge base is used to model the structure of the monitored system, i.e. the system of the machines. The knowlede base monitors the machines, data sources and CEP rules.

Each machine has one or multiple data sources associated to it. These data sources are e.g. sensors which are installed on the machine or machine components and provide information on the actual machine status. The meta-data associated with the sensors contains e.g. a name of the measurement, a name of the sensor and an address from which the data can be read.

The knowledge base models the types of situations that the edge device, here its CEP machine, should detect. Such a type of situation is an event and is characterized by the event rule. In the knowledge base these situations are modeled as operation types, together with their associated parameters list. After CEP rules are deployed, i.e. when an event rule has been sent to the CEP engines, the model in the knowledge base is updated. This means that event messages from the CEP engines (i.e. the CEP output events) are added as new data source for that class of machine, which event messages can be used for further processing.

According to one embodiment of the invention the common central configurator includes a user interface for defining an event for a certain class of machines, by using semantic models. Those situations which should be discovered during the monitoring of the machines, the maintenance relevant events, are defined by users. In most cases users do not know the CEP engine language. So the interface allows the user to use semantic language for defining the event. The necessary list of parameters is read from the knowledge base and shown to the user on the interface. The respective CEP engine language for that event information is hidden from the user.

The event rule is normally defined for a machine class. The user selects the class of machines for which he wants to apply this event rule. The event rule is going to be deployed with the same values for operation type parameters for each machine of that class.

Semantic description helps to bridge the ambiguity of the natural language when expressing notions and their computational representation in a formal language. The semantic description can be based on an ontology of the technical domains of the models. In computer science and information science, an ontology is a formal naming and rule of the types, properties, and interrelationships of the entities that really or fundamentally exist for a particular domain. An ontology compartmentalizes the variables needed for some set of computations and establishes the relationships between them. The semantic description can also include information which do not designate the technical nature, such as the owner of the data or model, the data source or the recording period.

It is possible that after definition of an event rule the user also defines a corresponding maintenance rule for this event.

According to one embodiment of the invention the common central configurator includes a rule deployment module which deploys a new event rule for an edge device of at least one machine of this class, preferably for the edge devices of all machines of this class, and which after that updates the model in the knowledge base with the new event rule.

Deployment preferably includes the following four operations:
The event rule for the CEP engine has to contain the format and the name of the new signals which have to be processed for the new event. Thus it is safeguarded that the CEP engine receives only the data from the selected sensors.

If there is a message broker then the necessary sensors have to subscribe to the message broker routing key. On configuration level the user selects the input data for the event. This data is published on the message broker's routing key. Since the CEP engine should receive and process the input data, the sensor should subscribe to the given routing key and send signals to the CEP engine.

Then the event rule in CEP language is created and sent to all CEP engines of the machines or machine components of the same class.

Then the knowledge base model is updated. If the event generates only intermediate results for further processing the selected machine type will have associated a new data item which can be considered a new source of data generated by that machine.

According to one embodiment of the invention if a machine is reconfigured the event rule is automatically updated by amending the model of that machine in the knowledge base and by deployment of the new event rule to the respective machines.

A machine reconfiguration is for example when one component of a machine is replaced by another component, or if a component is removed, or if a component is added. The user only has to revise the model of this machine in the knowledge base. The common central configurator then updates the model automatically, i.e. the machines and associated data points. Data points associated to the new components can be suggested by the user, based either on the data points of the replaced component of the same type, or based on templates for component classes. The model can be reviewed or adapted and then approved by the user.

The generic event rules are automatically updated when they are not up-to-date, e.g. if an event rule points to components which are not part of a machine anymore. Usually the parameters of the event rule remain the same and the common central configurator redeploys the event rules on the machines. The parameters are added for installed conmponents and deleted for removed components. All data sources (data points) which are necessary for each event rule are automatically found for each machine.

So when a machine is re-configured, the CEP programs in the different edge devices do not need to be re-written manually for each machine, which would not only require a lot of expertise and time but would also be error-prone.

The present invention also comprises respective computer program code means which means are adapted to perform all the steps of the method according to the invention when the computer program is run on a computer system containing a common central configurator and a multitude of edge devices.

So when the computer program is run, it prompts a user to define a maintenance relevant event for a certain class of machines by using the common central configurator, then it sends the respective event rule to the edge device of at least one machine of this class, preferably to the edge devices of all machines of this class, it stores the event rule in the edge device and it stores the event rule in the common central configurator.

The present invention also comprises a computer system, for performing the method according to the invention, the computer system comprising
- a multitude of machines with edge devices,
- a common central configurator,
   whereas in order to transfer data the machines are connected to the common central configurator via edge devices,
- whereas the common central configurator is designed to allow for defining a maintenance relevant event for a certain class of machines,
- whereas the common central configurator is designed to send the respective event rule to an edge device of at least one machine of this class, preferably to the edge devices of all machines of this class, whereas the edge device is part of the computer system, and to store the event rule,
- whereas the edge devices are designed to store the event rule.

The present invention enables machine tool fitters and operators of machine tools to easily define generic rules for generating soft sensors and complex events based on the machine condition. The present invention proposes a knowledge-based configuration of complex events, especially for CNC machine tools, and allows for flexible specification of new complex events and datapoints (e.g. aggregations), it allows definition of generic complex event rules that can be deployed on different machine instances and for different instances of the same component type, it allows automatic redeployment of complex event rules after a machine is re-configured.

The present invention is favourably based on a configuration interface embedded into a backend application, e.g. running in the cloud, and a CEP engine running on an edge device that is connected to e.g. a CNC machine tool.

As complex events can be used in order to automate machine tool maintenance (e.g. by defining maintenance rules such as that every 500,000 clamping cycles of the spindle the clamping unit of the spindle should be re-greased), as well as to improve machine monitoring, the invention helps
- to reduce maintenance costs, e.g. by reducing fitter working hours, by reducing the time needed for the definition and deployment of maintenance related rules,
- to reduce operator or working hours, by performing maintenance based on machine condition instead of maintenance in fixed time intervals,
- to reduce costs related to cloud resources, by aggregating data on the edge device and sending only aggregated signals or events to the application running in the cloud,
- to reduce spare part costs, by alerting the need for spare part exchange based on machine condition,
- to improve general machine condition monitoring,
- to increase productive machine hours,
- to improve documentation.

Based on the defined event rules specific CEP statements are deployed which detect special situation occurring on the machine status. The common central configurator, which is an event rule configuration framework, is created to simplify the way of defining the event rules. The event rules are used for monitoring the edge devices', i.e. the machine's, status in near real time. E.g. if there are 100 machines of the same type on the system, the user has to define only once one rule based on which 100 CEP statements are going to be deployed for monitoring each machine. On the other hand, the event rule configuration framework offers a user friendly user interface, preferably a Graphical User Interface. The user has to insert only necessary parameter's values based on needed operation without the necessity to have knowledge about a CEP engine and its language. Each machine, i.e. its machine controller, has a set of data, generated by its sensors, which can be read and used as input for its CEP engine. The state of the monitored machine can be detected in near real time.

### BRIEF DESCRIPTION OF FIGURES

The invention will be explained in closer detail by reference to a preferred embodiment, which is depicted schematically in the figures.
- Fig. 1: shows a scheme of a computer system according to the invention,
- Fig. 2: shows a user interface for entering a first new event,
- Fig. 3: shows a user interface for entering a second new event,
- Fig. 4: shows an event rule model,
- Fig. 5: shows a semantic model.

### WAYS TO IMPLEMENT THE INVENTION

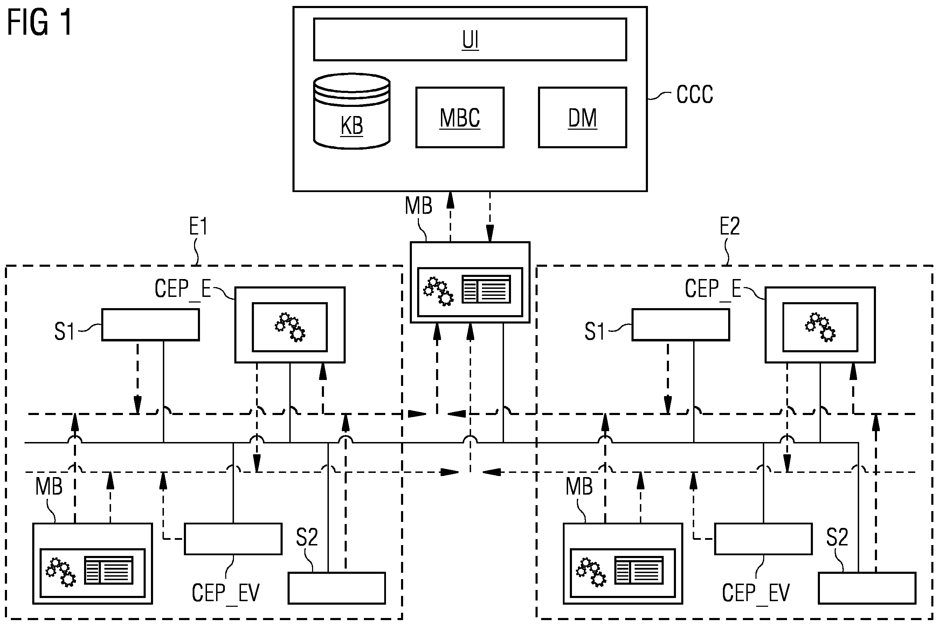

Fig. 1 shows a computer system containing a common central configurator CCC in its function as an event rule configuration framework. The common central configurator CCC contains a CEP rule configuration interface UI, a knowledge base KB, a message broker connector MBC, and a CEP rule deployment module DM.

A multitude of machines, here exemplary represented by two edge devices E1,E2 (each edge device E1,E2 for one machine), are connected to the common central configurator CCC via the message broker MB of their edge device E1,E2. There is an additional message broker MB in front of the common central configurator CCC which message broker MB communicates with the message broker connector MBC of the common central configurator CCC. Every edge device E1,E2 has a CEP engine CEP_E connected to its own an to all other message brokers MB. Every machine or edge device E1,E2, respectively, has two sensors S1,S2 sending their data to the communication system of the message brokers MB as well as to the own CEP engine CEP_E. The item CEP events (labelled CEP_EV) refers to events generated by the CEP engine CEP_E and published on the message broker MB.

The computer system here is used to monitor the machines and to generate maintenance relevant events based on system status. A maintenance use case is presented based on spindle condition monitoring of a CNC machine, i.e. to generate an event if the average clamping time deviates from a given value in a given period of time. In order to cover condition based spindle maintenance two CEP operation types (=event rules) are defined: "Aggregated Cycle Interval" and "Threshold". The result from the first event rule "Aggregated Cycle Interval" will be used as input to the second event rule "Threshold".

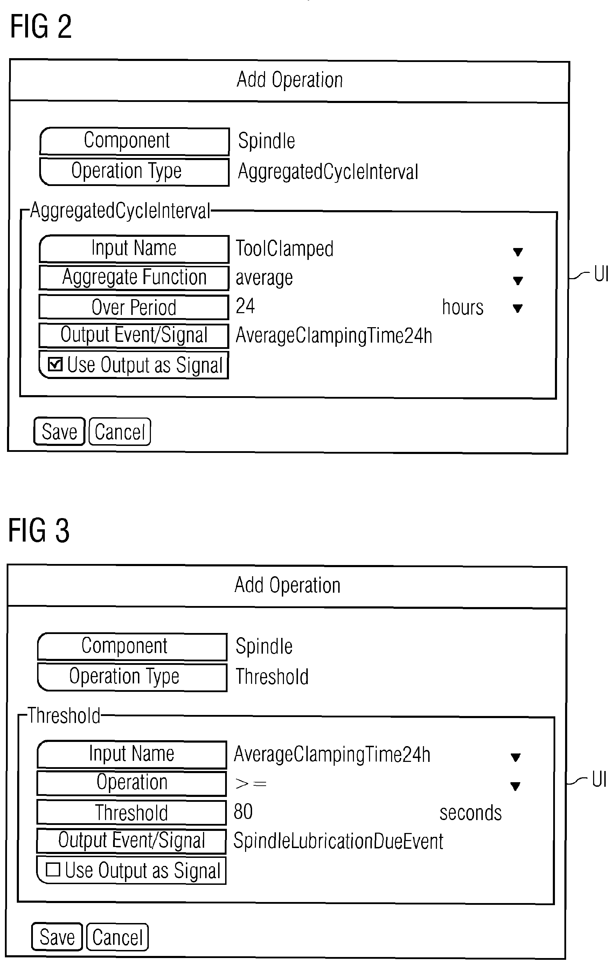

For the first event rule "Aggregated Cycle Interval" the input user interface UI looks like in Fig. 2. In a window "Add Operation" a new event rule can be defined. The user has to define to which component the event rule refers to, here it is the spindle of the CNC machine tool ("Spindle"). The event rule has to be named (under "Operation Type"), here as "AggregatedCycleInterval". Then the user has to give the name of the data source or signal for the input (under "Input Name") for the event rule, in this case he chooses the sensor which gives a Boolean value (0 or 1) for the clamping status of the tool ("ToolClamped"). The user chooses how the signal or data shall be aggregated (under "Aggregate Funktion"), here "average". Accordingly, the user has to define the period for aggregation (under "Over Period"), here "24" and the time unit, here "hours". The user could also choose other aggregate functions, such as a sum, or minimal or maximal values. The user names the output event or signal (under "Output Event/Signal"), here the chosen name is "AverageClampingTime24h". This first event rule generates an event which is used for further processing thus the box for "Use Output as Signal" is checked.

By clicking "Save" the new event rule is saved, translated into CEP language and sent to the CEP engines CEP_E of the machines M1,M2 over the CEP rule deployment module DM and the message brokers MB (see Fig. 1). Then the new event rule "Aggregated Cycle Interval" is saved in the knowledge base KB. The event "Aggregated Cycle Interval" is generated every 24 hours and it contains the value of the average time between spindle clamping cycles.

The first event rule "Aggregated Cycle Interval" is used to detect the average of the period between spindle cycles. This event rule will not generate final events.

For the second event rule "Threshold" the input user interface UI looks like in Fig. 3. As in Fig. 2, there is a window "Add Operation" where the new event rule can be defined. The user has to define to which component the event rule refers, here it is again the spindle of the CNC machine tool ("Spindle"). The event rule has to be named (under "Operation Type"), here as "Threshold". Then the user has to give the name of the data source or signal for the input (under "Input Name") for the event rule, in this case he chooses the output of the first event rule or operation type "AverageClampingTime24h". Since the first event rule yields a number, the possible operation (under "Operation") which are offered by the user interface UI and which can be chosen is for comparing values, here <, >, <=, >=. Here the user chooses " >= ". Then the user has to choose a threshold value (under "Threshold"), here he chooses "80" seconds. The user names the output event or signal (under "Output Event/Signal"), here the chosen name is "SpindleLubricationDueEvent". This second event rule generates an event which is not used for further processing thus the box for "Use Output as Signal" is not checked.

By clicking "Save" the new event rule is saved, translated into CEP language and sent to the CEP engines CEP_E of the machines M1,M2 over the CEP rule deployment module DM and the message brokers MB (see Fig. 1).

The second event rule "Threshold" gives an event when the average spindle clamping time over 24 hours exceeds 80 seconds. The generated event message of the event "SpindleLubricationDueEvent" has the following format:
ID number
date and time
Event Type: SpindleLubricationDueEvent
Affected Component: 45AX-Spindle
Affected Component Label: Spindle
Measurement: SpindleLubricationSpindleLubricationDueEvent
Value: 9.00275
Unit: seconds

This event message can be forwarded to the suitable maintenance executing entities.

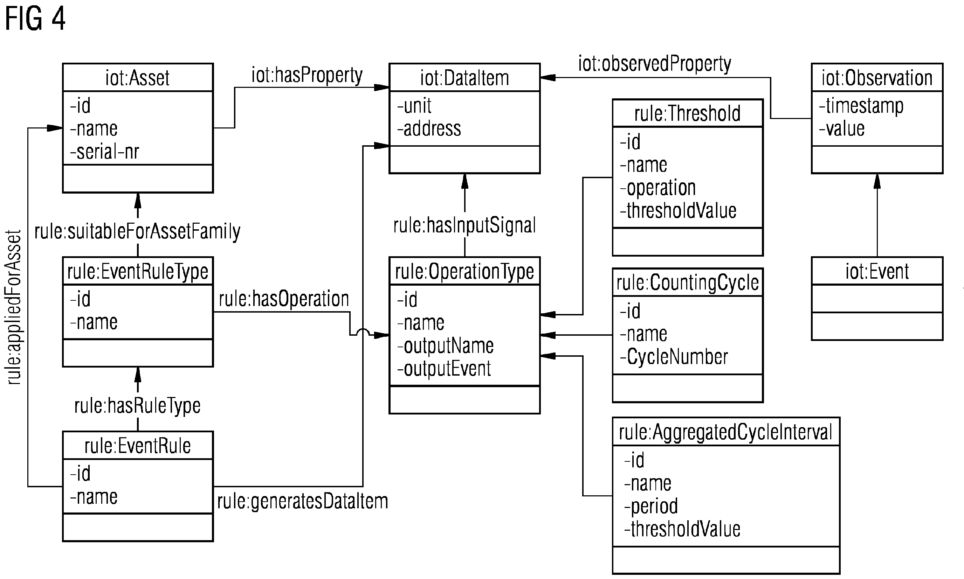

Fig. 4 depicts an event rule model for asset and data item classes. An asset can be a machine or a machine component that shall be monitored and for which event rules are created. Each asset item ("Iot:Asset") has a unique identification, like an ID number, for the computer system, a name (for display on the user interface UI) and a serial number (of the physical device). So the asset here could be the spindle. This event rule model will be stored in the knowledge base KB of the common central configurator CCC.

As properties of the asset ("Iot:hasProperty") different data can be assigned, here one data item "Iot:DataItem" is present, containing a unit and an address.

An event rule item ("rule:EventRule") with a certain ID and name points ("rule:hasRuleType") to a rule type item ("rule:EventRuleType") with a certain ID and name. The rule type item is linked to the asset item if it is suitable for this type of asset ("rule:suitableForAssetFamily"), i.e. for this class of machine or this class of machine component. The rule type item is also linked ("rule:hasOperation") to a rule item relating to the operation type ("rule:OperationType"), the operation type containing an ID, a name, an output name and an output event. The rule item relating to the operation type points ("rule:hasInputSignal") to the data item "Iot:DataItem".

The event rule item ("rule:EventRule") also points ("rule:generatesDataItem") to the data item and points ("rule:appliedForAset") to the asset item.

The data item receives ("Iot:observedProperty") observation data from the observation item ("Iot:Observation"), each observation contains a timestamp and a value and is triggered by an event item ("Iot:Event").

Here three different rules point to the operation type item ("rule:OperationType"): the threshold rule item ("rule:Threshold") containing an ID, a name, an operation and a treshold value, see Fig. 3; the counting cycle item ("rule:CountingCycle") containing an ID, a name and a cycle number; the item for aggregated cycle interval ("Rule:AggregatedCycleInterval") containing an ID, a name, a period and a threshold value, see Fig. 2.

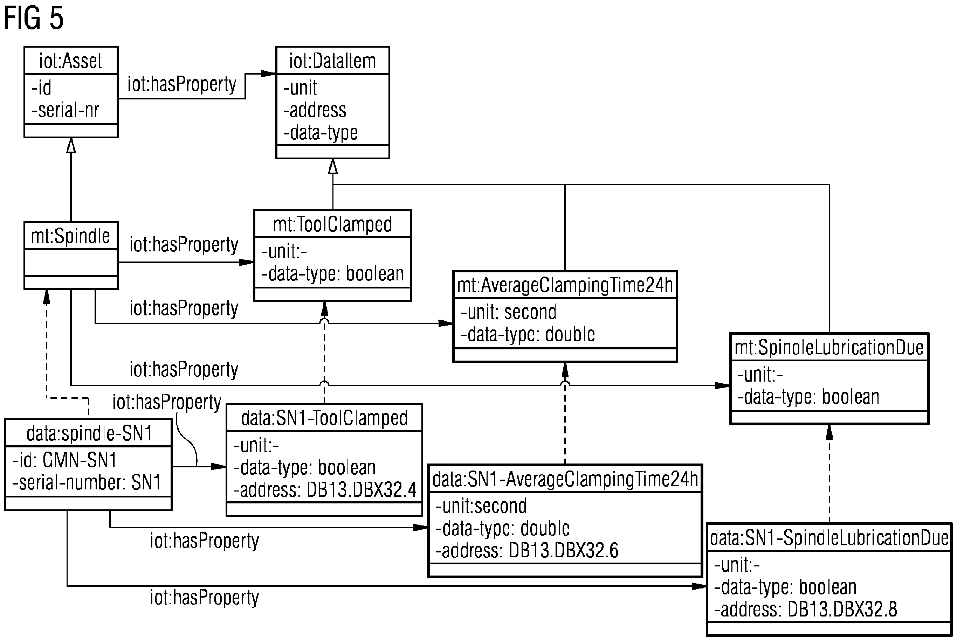

Fig. 5 depicts a semantic model of the spindle class and its data items. The spindle class (for spindles all having the same mechanical and technical properties) are defined in the asset item ("Iot:Asset") by an ID and a serial number. This item points ("Iot:hasProperty") to the data item ("Iot:DataItem") which contains information about the unit, the address in the system and the data type of this data.

The data of a certain spindle SN1 is defined in a respective item ("data:spindle-SN1") and contains an ID "GMN-SN1" for identification within the computer system and a serial number SN1. This data item points to the general spindle item ("mt:Spindle") which again points to the asset item. The general spindle item ("mt:Spindle") at the beginning additionally points (Iot:has Property") only to one property item for the clamped tool ("mt:ToolClamped") which item contains information about the unit and the Boolean data type according to which the tool is clamped or not. The item for the clamped tool points to the data item ("Iot:DataItem"). Accordingly, also the spindle data item ("data:spindle-SN1") points ("Iot:has Property") to its tool clamped item ("data:SN1-ToolClamped") which contains a unit, a concrete data type (Booelan) and a concrete address: DB13.DBX32.4. The tool clamped item of the concrete spindle SN1 points to the general item for the clamped tool ("mt:ToolClamped").

Now when the user defines a new event rule "Aggregated Cycle Interval" with the output event or signal "AverageClampingTime24h", see Fig. 2, then this output event is added both as a new general item "mt:AverageClampingTime24h" to the properties of the general spindle item ("mt:Spindle"), parallel to the existing clamped tool item ("mt:ToolClamped"), and as a new item "data:SN1-AverageClampingTime24h" to the concrete spindle item ("data:spindle-SN1"), parallel to the existing data item. The concrete spindle item "data:spindle-SN1-AverageClampingTime24h" contains the unit of the data, here seconds, the data type, here double, and the concrete address DB13.DBX32.6, and points to the general item "mt:AverageClampingTime24h".

When the user defines the new event rule "Threshold" with the output event or signal "SpindleLubricationDueEvent", see Fig. 3, then this output event is added both as a new general item "mt:SpindleLubricationDue" to the properties of the general spindle item ("mt:Spindle"), parallel to the two existing property items, and as a new item "data:SN1-SpindleLubricationDue" to the concrete spindle item ("data:spindle-SN1"), parallel to the existing data item. The concrete spindle item "data:SN1-SpindleLubricationDue" contains the unit of the data, here no units, the data type, here Boolean, and the concrete address DB13.DBX32.8, and points to the general item "mt:SpindleLubricationDue".

### LIST OF REFERENCE SIGNS

- CCC: common central configurator
- CEP_E: CEP engine
- CEP_EV: CEP events
- DM: CEP rule deployment module
- KB: knowledge base
- E1: edge device of a machine
- E2: edge device of a machine
- MB: message broker
- MBC: message broker connector
- S1: sensor
- S2: sonsor
- UI: CEP rule configuration user interface

## Claims

1. Method for implementing event rules for maintenance relevant events in a multitude of machines, whereas the method uses a computer system containing a common central configurator (CCC), whereas in order to transfer data the machines are connected to the common central configurator, the method comprising the steps of
- defining a maintenance relevant event for a certain class of machines by using the common central configurator (CCC),
- sending the event rule to an edge device (E1,E2) of at least one machine of this class, preferably to the edge devices of all machines of this class, whereas the edge device (E1,E2) is part of the computer system, and storing the event rule in the edge device (E1,E2),
- storing the event rule in the common central configurator (CCC).

2. Method according to claim 1, wherein the edge device (E1,E2) is situated at or near the machine whereas the common central configurator (CCC) is realized as a cloud service.

3. Method according to claim 1 or 2, wherein the edge device (E1,E2) includes a complex event processing engine (CEP_E) which, on the basis of the event rule and on the basis of input data from the machine, creates an event message if the input data fulfills the event rule and sends the event message to a device which deploys a respective maintenance rule.

4. Method according to claim 3, wherein the edge device (E1,E2) includes a message broker (MB) which receives signals from sensors (S1,S2) of the machine and processes the signals before sending them as input data to the complex event processing engine (CEP_E).

5. Method according to any of claims 1 to 4 wherein the common central configurator (CCC) includes a knowledge base (KB) which stores a model of each machine, its data sources, its events and corresponding event rules, whereas new events are stored as new data sources.

6. Method according to any of claims 1 to 5 wherein the common central configurator (CCC) includes a user interface (UI) for defining an event for a certain class of machines, by using semantic models.

7. Method according to claim 5, wherein the common central configurator (CCC) includes a deployment module (DM) which deploys a new event rule for an edge device (E1,E2) of at least one machine of this class, preferably for the edge devices (E1,E2) of all machines of this class, and which after that updates the model in the knowledge base (KB) with the new event rule.

8. Method according to claim 5 wherein if a machine is reconfigured the event rule is automatically updated by amending the model of that machine in the knowledge base (KB) and by deployment of the new event rule to the respective machines.

9. Computer program code means adapted to perform all the steps of any one of the preceding claims when the computer program is run on a computer system containing a common central configurator (CCC) and a multitude of edge devices (E1,E2).

10. Computer system, for performing the method according to any of claims 1 to 8, comprising
- a multitude of machines with edge devices (E1,E2),
- a common central configurator (CCC),
whereas in order to transfer data the machines are connected to the common central configurator (CCC) via edge devices (E1,E2),
- whereas the common central configurator (CCC) is designed to allow for defining a maintenance relevant event for a certain class of machines,
- whereas the common central configurator (CCC) is designed to send the respective event rule to an edge device (E1,E2) of at least one machine (M1,M2) of this class, preferably to the edge devices (E1,E2) of all machines of this class, whereas the edge device (E1,E2) is part of the computer system, and to store the event rule,
- whereas the edge devices (E1,E2) are designed to store the event rule.
